Europäisches Patentamt

European Patent Office

Office européen des brevets

(11) Veröffentlichungsnummer: **0 313 785**

**A1**

# (12) EUROPÄISCHE PATENTANMELDUNG

(21) Anmeldenummer: 88115070.0

(22) Anmeldetag: 15.09.88

(51) Int. Cl.4: **B60C 9/04**

(30) Priorität: 24.10.87 DE 3736097

(43) Veröffentlichungstag der Anmeldung:
03.05.89 Patentblatt 89/18

(84) Benannte Vertragsstaaten:
AT BE CH DE ES FR GB GR IT LI LU NL SE

(71) Anmelder: **Continental Aktiengesellschaft**
**Königsworther Platz 1**
**D-3000 Hannover 1(DE)**

(72) Erfinder: **Liskow, Klaus**
**Hirschdamm 25**
**D-3002 Wedemark 2(DE)**
Erfinder: **Hoppenheit, Reinhard, Dr.**
**Lindenstrasse 31**
**D-3414 Hardegsen 1(DE)**

(54) **Bombierter Rohling für Fahrzeugluftriefen.**

(57) Die Erfindung bezieht sich auf einen bombierten Rohling mit einer ein- oder mehrlagigen Karkasse (2, 3) und einer unter der Karkasse (2, 3) angeordneten Gummi-Faserlage (9), wobei sich die Fasern (14) der Gummi-Faserlage (9) in einer Faserhauptrichtung (12) erstrecken, aus dem in einer Vulkanisierpresse durch Blähen ein Fahrzeugluftreifen geformt wird.

Um unter Einsatz einer gleichmäßig dicken Kautschukschicht als der Karkasse (2, 3) benachbarte innere Lage, einen Reifen zu schaffen, dessen innere Lage im fertig vulkanisierten Zustand überall gleich dick ist, wird vorgeschlagen, daß die Faserhauptrichtung (12) mit der Richtung (13) der Festigkeitsträger (10) der auf der Gummi-Faserlage (9) befindlichen Karkaßlage (3) einen Winkel von mindestens 50° einschließt, so daß die Fasern (14) der Faserlage (9) beim Blähen des Rohlings als radialer Strömungswiderstand wirken.

FIG.2

## Bombierter Rohling für Fahrzeugluftreifen

Die Erfindung bezieht sich auf einen bombierten Rohling mit einer ein- oder mehrlagigen Karkasse und einer unter der Karkasse angeordneten Gummi-Faserlage, wobei sich die Fasern der Gummi-Faserlage in einer Faserhauptrichtung erstrecken, aus dem in einer Vulkanisierpresse unter Blähen ein Fahrzeugluftreifen geformt wird.

Ein Fahrzeugluftreifen mit Gummi-Faserlage ist in der DE-OS 2 228 219 offenbart, wobei die dort vorgeschlagenen Fasern mit den radialen Festigkeitsträgern der Karkasse einen Winkel von höchstens 30° einschließen. Mit dieser Maßnahme sollen Krümmungsunterschiede zwischen der Karkasse und den Gürtellagen überbrückt werden.

Auch die DE-OS 23 45 936 offenbart einen Fahrzeugluftreifen mit in Cordlage angeordneten, zwischen der Karkasse und dem Reifenhohlraum befindlichen fadenförmigen Festigkeitsträgern, die aus einer Vielzahl von in Fadenlängsrichtung aufeinanderfolgenden Abschnitten bestehen. Dabei ist vorgesehen, daß die Abschnitte mit den Karkaßfestigkeitsträgern Winkel von 20 bis 50° einschließen, vorzugsweise Winkel von etwa 30°. Entsprechend der dort gestellten Aufgabe, die Durchstechsicherheit an Reifen für schwere Erdbewegungsmaschinen zu erhöhen, werden bevorzugt zwei gegensinnig steigende Lagen unterhalb der Karkasse eingesetzt, wobei als Länge der Faserabschnitte etwa 10 bis 40 mm in Betracht gezogen sind.

Bei Rohlingen, die in einer solchen Form vulkanisiert werden, daß die Karkasse nicht in ihrer neutralen Lage im fertigen Reifen liegt, besteht das Problem, daß die Karkasse beim Blähen und noch nicht vernetztem Kautschuk die Tendenz hat, sich der neutralen Lage anzunähern. Durch das Blähen wird der Rohling an die Innenseite der Vulkanisierpresse angelegt und es wird die Resterhebung bewirkt, die die Ausformung des Reifenrohlings ermöglicht. Beim Blähen in der Reifenvulkanisierpresse kommt es also insbesondere in den Schulterbereichen dazu, daß sich die Karkaßfäden zum Reifeninneren bewegen, wobei sich die innen verbleibende Kautschukwandstärke verringert. Zur vereinfachten Beschreibung dieses Sachverhaltes wird im Rahmen dieser Anmeldung der Begriff "Restwandstärke" eingeführt, der am fertig vulkanisierten Reifen den kleinsten Abstand zwischen einem Karkaßfestigkeitsträger und der inneren Grenze der benachbarten inneren Kautschukschicht meint.

In ungünstigen Fällen, etwa wenn die chemische Vernetzung zu langsam fortschreitet, oder der Blähdruck zu groß ist, oder die innere Kautschukschicht zu dünn ist, können die Karkaßfäden in den Schultern nach innen hervortreten. Reifen mit solchen Fehlern gehören zum Ausschuß, weil die bloßgelegten Karkaßfestigkeitsträger innerhalb kürzester Zeit verrotten und weil der in sie hereinwirkende Luftdruck die Haftung zwischen Gummi und Karkasse beeinträchtigt. Bislang wird die Bloßlegung allein dadurch vermieden, daß die der Karkasse nächstliegende innere Kautschukschicht - bei mit Schlauch zu fahrenden Reifen ist diese auch die innerste Schicht, während bei schlauchlos zu fahrenden Reifen zwecks Dichtung als innerste Lage noch eine Butylschicht folgt - bei der Reifenkonfektion so dick dimensioniert ist, daß die Restwandstärke mindestens 0,3 mm beträgt. Damit am fertigen Reifen auch in den Schultern die innere Lage eine Wandstärke von mindestens 0,3 mm hat, muß in Kauf genommen werden, daß die innere Lage an den übrigen Stellen dicker als nötig ist. Dadurch werden die Reifen unnötig schwer, bekommen einen unnötig hohen Rollwiderstand, werden beim Lauf unnötig heiß und altern dadurch vorzeitig. Bei PKW-Reifen wird überdies auch die höchstzulässige Geschwindigkeit durch die Erhitzung gesenkt.

Die unerwünschte Maßdifferenz zwischen der dünnsten Stelle der inneren Kautschukschicht und der dicksten Stelle der inneren Kautschukschicht ist um so größer, desto größer das Volumen der Profilklötze ist. Der Übelstand muß also am dringensten an Reifen größer Profiltiefe beseitigt werden; bei den PKW-Reifen bezieht sich die Erfindung insbesondere auf Winterreifen, bei Nutzfahrzeugreifen bezieht sie sich insbesondere auf Erdbewegungsmaschinen und auf Ackerschlepperreifen. Die Erfindung bezieht sich gleichermaßen auf Diagonal- wie auf Reifen mit einer Radialkarkasse und auf Reifen, die mit Schlauch zu fahren sind und auf schlauchlose Reifen.

Als nächstliegende Abhilfe könnte man einen in der Weise profilierten Kautschukstreifen als innere Lage einsetzen, daß der Streifen in den Schulterbereichen des Reifens dicker dimensioniert ist als im Reifenzenit und in den Seitenwandbereichen. Diese Abhilfe ist jedoch herstellungstechnisch ungünstig, da dann je nach Reifenbreite unterschiedliche Kalanderwalzen eingesetzt werden müßten, wodurch die Herstellungslogistik und Vorratshaltung verteuert würde. Deshalb ist es die Aufgabe der Erfindung, unter Einsatz einer gleichmäßig dicken Kautschukschicht als der Karkasse benachbarte, innere Lage, einen Reifen zu schaffen, dessen innere Lage im fertig vulkanisierten Zustand überall gleich dick ist. Es soll also insbesondere der Verdünnung der inneren Lage in den Schulterbereichen während des Vulkanisierens entgegen gewirkt werden.

Mit Einsatz von Fasern in der unter der Karkasse angeordneten Lage, wobei sich die Fasern der Gummi-Faserlage in einer Faserhauptrichtung erstrecken, wird die Aufgabe erfindungsgemäß dadurch gelöst, daß die Faserhauptrichtung mit der Richtung der Festigkeitsträger der auf der Gummi-Faserlage befindlichen Karkaßlage einen Winkel von mindestens 50° einschließt, so daß die Fasern der Faserlage beim Blähen des Rohlings als radialer Strömungswiderstand wirken. Das Optimum dieser Wirkung wird erzielt, wenn die Faserhauptrichtung,insbesondere im Bereich der Reifenschultern, etwa senkrecht auf der Richtung der Festigkeitsträger der auf der Gummi-Faserlage befindlichen Karkaßlage steht. Vorzugsweise sind die Fasern mindestens um den Faktor 20 länger als dick und zwischen 2 und 8 mm lang. Bei dieser Bemessung versteifen die Fasern die Karkasse kaum, weil sie nur wenige Karkaßfäden überdecken, bieten aber einen großen radialen Strömungswiderstand für den Kautschuk.

Die Gummi-Faserlage wird durch Kalandrieren hergestellt. Die Faserhauptrichtung - das ist der statistische Häufungspunkt der Richtungen aller einzelnen Fasern - stimmt bei einer kalandrierten Bahn mit der Kalandrierrichtung überein. Durch Einbau einer solchen Lage, bei der die Kalandrierrichtung in die Reifenumfangsrichtung weist, kann die Orthogonalität zwischen Faserhauptrichtung und Karkaßfadenrichtung an Radialreifen leicht verwirklicht werden. Um die Orthogonalität auch bei Diagonalreifen zu verwirklichen, kann die Bahn hingegen nicht direkt eingebaut werden, sondern muß zunächst geschert werden. Mit "Scheren" ist das bekannte Verfahren gemeint, mit dem Bahnen erzeugt werden, in denen die Fadenrichtung schräg zur Bahnlängsrichtung steht. Beim Scheren wird zunächst die aus dem Kalander kommende Bahn mit einem spitzwinklig zur Bahnlängsrichtung stehenden Messer in gleichlange,parallelogrammartige Stücke zerschnitten, die anschließend mit ihren nicht beschnittenen Parallelogrammseiten wieder zusammengesetzt werden. Das gleiche Verfahren kann auch eingesetzt werden bei einer Bahn, die Fasern in Wirrlage, jedoch mit einer bevorzugten Hauptrichtung enthält, um daraus eine andere Bahn zu erzeugen, deren Faserhauptrichtung schräg zur Bahnlängsrichtung liegt. Unter Einsatz einer solchen gescherten Bahn ist es auch bei Diagonalreifen möglich, daß die Faserhauptrichtung senkrecht steht auf der Fadenrichtung der inneren Karkaßlage. Durch die Orthogonalität wird der größte Strömungswiderstand erreicht und der unerwünschte radiale Kautschukfluß am besten unterbunden; allerdings verteuert das Scheren der Gummi-Faserlage den Reifen. Für einen Rohling mit einer Diagonalkarkasse kann, sofern die Fadenrichtung der inneren Karkaßlage mit der Umfangsrichtung einen Winkel größer 50° einschließt, ein befriedigender Strömungswiderstand auch damit erzeugt werden, daß die Faserhauptrichtung in der Umfangsrichtung liegt. Dann ist kein Scheren der Gummi-Faserlage erforderlich.

Für einen mit Schlauch zu fahrenden Reifen wird zweckmäßigerweise keine weitere Gummischicht innen von der Gummi-Faserlage angeordnet, die Gummi-Faserlage ist also die erste Lage. Im Falle einer Diagonalkarkasse ist die Gummi-Faserlage vorzugsweise zwischen 0,5 und 0,9 mm dick, im Falle einer Radialkarkasse zwischen 0,6 und 1,2 mm.

Für einen schlauchlosen Reifen wird, wie im Stand der Technik bekannt, im Rohling als erste Lage eine Butylkautschukschicht angeordnet, die nach der Vulkanisation dem fertigen Reifen die nötige Luftdichtheit gewährt. Zwischen der Butylschicht und der inneren Karkaßlage wird erfindungsgemäß die Gummi-Faserschicht mit gegenüber der inneren Karkaßfadenrichtung steilwinkligen Faserhauptrichtung angeordnet. In Verbindung mit einer Diagonalkarkasse ist die Gummi-Faserlage vorzugsweise zwischen 0,3 und 0,6 mm, in Verbindung mit einer Radialkarkasse zwischen 0,4 und 0,7 mm dick.

Die höheren Werte der jeweiligen Dickenintervalle sind bei großen Profiltiefen, wie sie insbesondere für Ackerschlepperreifen eingesetzt werden, und für stark von der Neutralen abweichende Karkaßkonstruktionen zu wählen; ansonsten sind Dicken aus dem unteren oder mittleren Bereich der beiden angegebenen Intervalle zu bevorzugen. Die als Gummi-Faserlage ausgebildete Innenseele mit mindestens 50° großem Winkel zwischen der Faserhauptrichtung und der Fadenrichtung der inneren Karkaßlage verändert ihre Dicke beim Vulkanisieren wesentlich weniger als die bekannten Innenseelen. Je nach Reifendimension und Profiltiefe beträgt die Dickenabnahme in den Schultern zwischen 0,2 und 0,5 mm und liegt damit erheblich unter den bisherigen Dickenabnahmen dieser Schicht, die zwischen 0,6 und 2 mm betrugen. Infolge der Kautschukeinsparung sind Reifen, die aus erfindungsgemäßen Rohlingen vulkanisiert werden, billiger und leichter. Sie weisen überdies einen geringeren Rollwiderstand und größere Haltbarkeit auf.

Die Kautschukmischung zur Herstellung der Gummi-Faserlage enthält bis zu 20 Massenprozent Fasern. Vorzugsweise werden nicht neue Fasern eingesetzt, sondern auf die nötige Länge gehäckselte Reste von kautschukbeschichteten Cordbahnen. Diese Abfallstoffe fallen in einer Reifenfabrik in mehr als ausreichender Menge an. Durch den Einsatz dieser Abfallstoffe wird das Müllaufkommen verringert und ein Beitrag zum Umweltschutz erbracht. Außerdem werden durch dieses Recycling die Mischungskosten gesenkt und die erforderliche Mischungsdauer ist gegenüber dem Einsatz neuer Kurzfasern kürzer, wodurch auch die Verfahrenskosten gesenkt sind.

Die Erfindung wird nachfolgend anhand Ausführungsbeispiele näher erläutert.

Es zeigt:

Fig. 1 einen Querschnitt durch einen erfindungsgemäßen Rohling

Fig. 2 einen teilweise im Schnitt dargestellten Teilausschnitt aus einem erfindungsgemäßen Rohling, gesehen vom Reifeninneren aus.

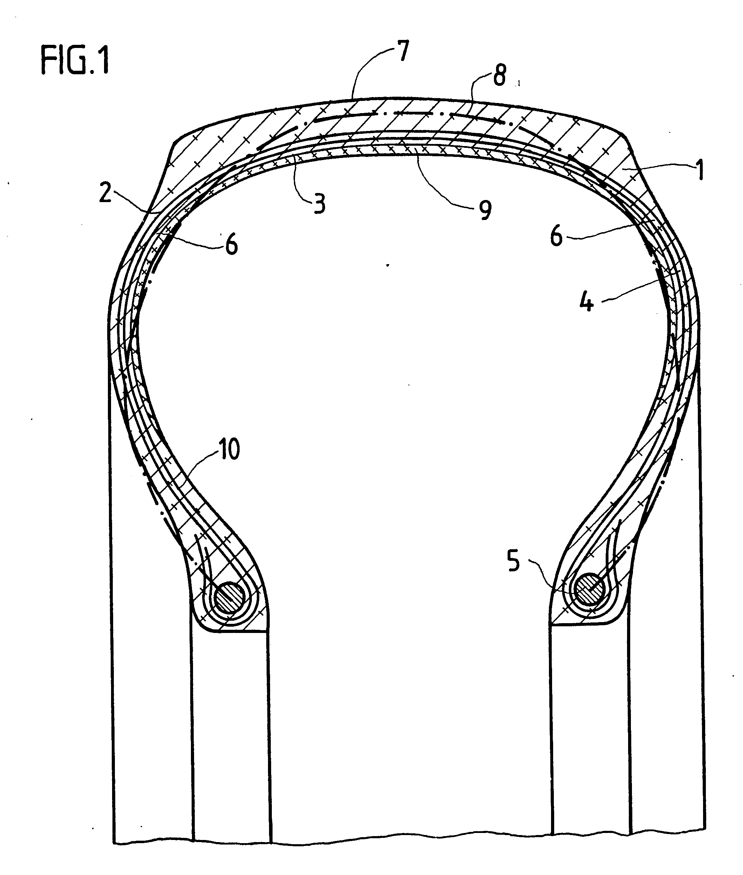

Die Figur 1 zeigt einen Rohling 1 für einen mit Schlauch zu fahrenden Fahrzeugluftreifen, der eine aus einer äußeren Lage 2 und einer inneren Lage 3 aufgebaute Diagonalkarkasse 4 aufweist. Die Diagonalkarkasse 4 ist um zwei Wulstkerne 5 geschlungen. Um ohne große Gummihäufung in den Reifenschultern 6 breite Lauffläche 7 zu verwirklichen, ist die Karkasse 4 gegenüber der gestrichelt gezeichneten Karkaßneutralen 8 im Bereich der Lauffläche 7 abgeplattet. In den Reifenschultern 6 befindet sich die Karkasse 4 außerhalb der Neutralen 8. Beim Resterheben in der Vulkanisierform, das insbesondere der Ausformung des Laufflächenprofiles dient, zeigt die Karkasse 4 das Bestreben, sich der Neutralen 8 anzunähern. Dabei fließt in den Schultern 6 Kautschuk von innen durch die beiden gekreuzten Karkaßlagen 2,3 hindurch nach außen.

Erfindungsgemäß ist unter der Karkasse eine Gummi-Faserlage 9 angeordnet, deren Faserhauptrichtung 12 in steilem Winkel zur Richtung der Festigkeitsträger 10 der auf der Gummi-Faserlage 9 befindlichen inneren Karkaßlage 3 steht. In diesem Ausführungsbeispiel ist für den steilen Winkel als Maß 90° gewählt, wordurch der maximale Sperreffekt gegen den radialen Kautschukfluß erreicht wird.

Für mit hohen Luftdruck zu betreibende LKW-Reifen kann zur Schonung des Schlauches die Anordnung einer weiteren inneren Kautschuklage erforderlich sein, die dann die erste Lage wäre. Diese Polsterschicht enthält vorteilhafterweise keine Fasern, so daß eine Beeinträchtigung des Polstereffektes vermieden ist.

Zur Vulkanisation schlauchloser Reifen wird in den Rohling als erste Lage eine Dichtschicht angeordnet, vorzugsweise aus Butylkautschuk. Ansonsten entsprechen die Rohlinge für schlauchlose Reifen denen für mit Schlauch zu fahrenden Reifen. Die Gummi-Faserlage verhindert trotz ihrer geringen Dicke infolge des steilen Winkels zwischen Faserhauptrichtung und Fadenrichtung der inneren Karkaßlage die Berührung zwischen den Karkaßfäden einerseits und dem Butylkautschuk andererseits, so daß die geringe Adhäsion beider Materialien im fertigen Reifen nicht zu den gefürchteten Blasen führt. Die Adhäsion des Butylkautschuks an der Gummi-Faserlage bereitet keine Schwierigkeiten, zumal die Fasern infolge des Kalandrierens auch an den Rändern der Gummi-Faserschicht vollständig von Kautschuk benetzt sind.

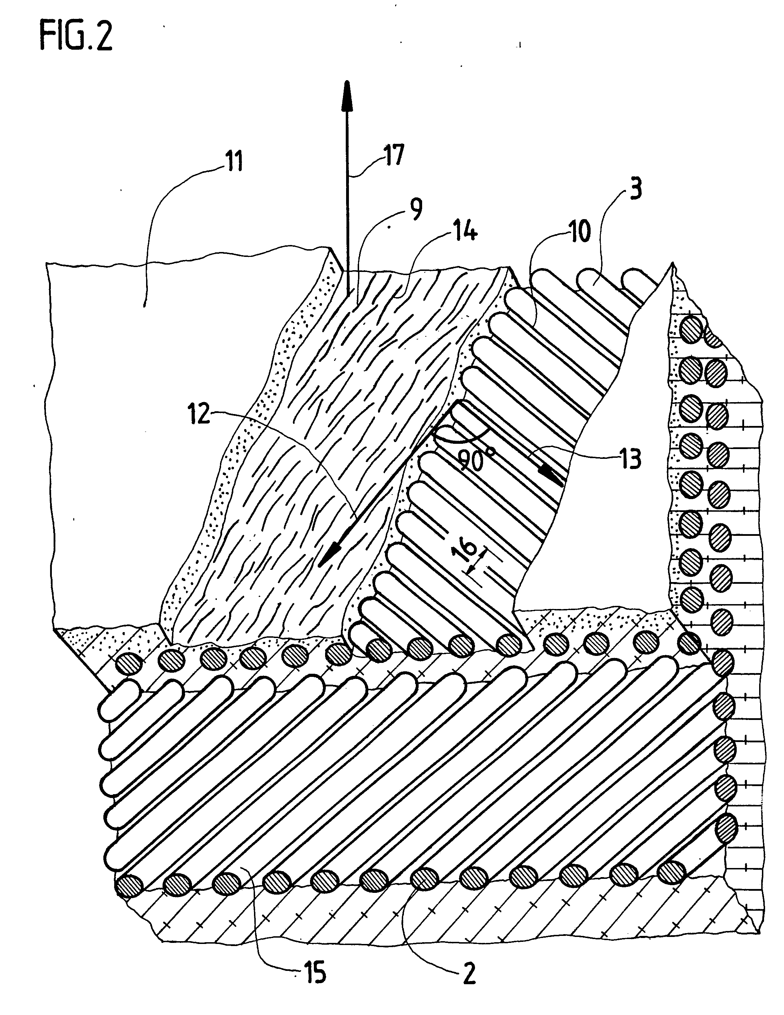

Die Figur 2 zeigt einen teilweise geschnittenen Ausschnitt aus dem Schulterbereich des gleichen Rohlings wie in Figur 1 gezeigt. Als Blickwinkel ist eine Sicht vom Reifeninnenraum her gewählt. Während im oberen Bildbereich sowohl am linken wie auch am rechten Rand die innere Oberfläche 11 der Gummi-Faserlage 9 zu sehen ist, sind an den übrigen Stellen verschiedene Schichten des Rohlingaufbaus freigelegt. Zu erkennen ist die Gummi-Faserlage 9 mit ihren überwiegend in der Faserhauptrichtung 12 verlaufenden Fasern 14, die innere Karkaßlage 3 mit ihren Festigkeitsträgern 10 und die äußere Karkaßlage 2 mit ihren Festigkeitsträgern 15. Die Richtung 13 der Festigkeitsträger 10 der inneren Karkaßlage 3, die sogenannte Fadenrichtung 13 der inneren Karkaßlage, steht senkrecht auf der Faserhauptrichtung 12 der Gummi-Faserlage 9. Die mittlere Faserlänge entspricht etwa dem doppelten des Abstandes 16, der Festigkeitsträger 10 der inneren Karkaßlage 3 voneinander. Diese Länge ist ausreichend, um das aus den Festigkeitsträgern 10 gebildete Gatter für einen radialen Kautschukdurchtritt praktisch zu verstopfen, ist aber andererseits kurz genug, um die Weichheit der Karkaßkonstruktion weitgehend zu erhalten. Bei Radialreifen, die infolge ihrer Gürtellagen ohnehin im Laufflächenbereich sehr steif sind, dürfen die Fasern auch deutlich länger sein. Dort würden die Fasern 14 zweckmäßigerweise in Umfangsrichtung 17 ausgerichtet sein.

Trotz Senkung der Herstellungskosten erlaubt die Erfindung die Herstellung besserer Reifen; insbesondere sind Gewicht und Rollwiderstand verringert. Während für Nutzfahrzeugreifen die erhöhte Wirtschaftlichkeit von größter Bedeutung ist, erlaubt die Erfindung im PKW-Sektor die Konstruktion von Hochgeschwindigkeits-Winterreifen mit vergrößerter Profiltiefe und damit verbesserter Traktion auf Schnee.

## Ansprüche

1. Bombierter Rohling mit einer ein- oder mehrlagigen Karkasse und einer unter der Karkasse angeordneten Gummi-Faserlage, wobei sich die Fasern der Gummi-Faserlage in einer Faserhauptrichtung erstrecken, aus dem in einer Vulkanisierpresse unter Blähen ein Fahrzeugluftreifen geformt wird, **dadurch gekennzeichnet,** daß die Faserhauptrichtung (12) mit der Richtung (13) der Festigkeitsträger der auf der Gummi-Faserlage (9) befindlichen Karkaßlage (3) einen Winkel von mindestens 50° einschließt, so daß die Fasern (14) der Faserlage (9) beim Blähen des Rohlings als radialer Strömungswiderstand wirken.

2. Rohling nach Anspruch 1, dadurch gekennzeichnet, daß die Fasern (14) zwischen 2 und 8 mm lang sind.

3. Rohling nach Anspruch 1, dadurch gekennzeichnet, daß die Fasern (14) mindestens um den Faktor 20 länger als dick sind.

4. Rohling nach Anspruch 1, dadurch gekennzeichnet, daß die Faserhauptrichtung (12) insbesondere im Bereich der Reifenschultern (6) etwa senkrecht auf der Richtung (13) der Festigkeitsträger (10) der auf der Gummi-Faserlage (9) befindlichen Karkaßlage (3) steht.

5. Rohling nach Anspruch 1 mit einer Diagonalkarkasse, dadurch gekennzeichnet, daß die Faserhauptrichtung (12) in der Umfangsrichtung (17) liegt.

6. Rohling nach Anspruch 1 mit einer Diagonalkarkasse für einen mit Schlauch zu fahrenden Reifen, dadurch gekennzeichnet, daß die Gummi-Faserlage (9) zwischen 0,5 und 0,9 mm dick ist.

7. Rohling nach Anspruch 1 mit einer Radialkarkasse für einen mit Schlauch zu fahrenden Reifen, dadurch gekennzeichnet, daß die Gummi-Faserlage (9) zwischen 0,6 und 1,2 mm dick ist.

8. Rohling nach Anspruch 1, der für den Betrieb mit einem Schlauch vorgesehen ist, dadurch gekennzeichnet, daß die Gummi-Faserlage (9) die erste Lage des Rohlings (1) ist.

9. Rohling nach Anspruch 1 mit einer Diagonalkarkasse für einen schlauchlosen Reifen, dadurch gekennzeichnet, daß die Gummi-Faserlage(9)zwischen 0,3 und 0,6 mm dick ist.

10. Rohling nach Anspruch 1 mit einer Radialkarkasse für einen schlauchlosen Reifen, dadurch gekennzeichnet, daß die Gummi-Faserlage zwischen 0,4 und 0,7 mm dick ist.

11. Rohling nach Anspruch 1, bei dem die Gummi-Faserlage (9) nicht die erste Lage des Rohlings ist, dadurch gekennzeichnet, daß die Gummi-Faserlage nur in den Schulterbereichen (6) angeordnet ist.

FIG.1

FIG.2

## EINSCHLÄGIGE DOKUMENTE

EP 88115070.0

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE - A1 - 3 415 280 (CONTINENTAL GUMMI-WERKE AG)<br><br>* Ansprüche 1,5,6; Seite 3, Zeilen 1-10; Seite 5, Zeilen 1-16 *<br><br>-- | 1-4,8, 11 | B 60 C 9/04 |
| A | GB - A - 2 096 949 (BRIDGESTONE TIRE KABUSHIKI KAISHA)<br><br>* Fig. 1,2; Seite 2, Zeilen 35-53 *<br><br>---- | 1,4,6-8,11 | |

RECHERCHIERTE
SACHGEBIETE (Int. Cl.4)

B 60 C

Der vorliegende Recherchenbericht wurde für alle Patentansprüche erstellt.

| Recherchenort | Abschlußdatum der Recherche | Prüfer |
|---|---|---|
| WIEN | 31-01-1989 | WIDHALM |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82